# EUROPEAN PATENT APPLICATION

(11) **EP 3 336 630 A1**
(43) Date of publication of application: **20.06.2018**
(21) Application number: 17206918.9
(22) Date of filing: 13.12.2017
(51) Int. Cl.: G05B 19/4155, G05B 19/418

(54) **NC PROGRAM TRANSFER APPARATUS**

(30) Priority: 14.12.2016 JP 2016242346
(71) Applicant: FANUC CORPORATION, Oshino-mura Minamitsuru-gun Yamanashi 401-0597 (JP)
(72) Inventor: Takemoto, Masanobu, Yamanashi, 401-0597 (JP)
(74) Representative: Schmidt, Steffen J.

(57) **Abstract**

An NC program transfer apparatus includes: a determiner (28) for determining whether or not a selected NC program is one that is generated for a selected wire electrical discharge machine (14); and a transfer unit (30) which transfers the selected NC program to the selected wire electrical discharge machine (14) when the selected NC program is one that is generated for the selected wire electrical discharge machine (14) and prohibits the selected NC program from being transferred to the selected wire electrical discharge machine (14) when the NC program is not the one that is generated for the selected wire electrical discharge machine (14).

## Description

### BACKGROUND OF THE INVENTION

### Field of the Invention:

The present invention relates to an NC program transfer apparatus for transferring an NC program to a machine tool having a numerical control device.

### Description of the Related Art:

Depending on models of machine tool, programs differ that are executed in numerical control devices for controlling the models of machine tool. Japanese Laid-Open Patent Publication No. 05-313720 discloses a configuration in which, when, in a control device for controlling a machine, the number given to a program that is designated by the operator does not match any one of numbers given to executable programs stored in advance, the execution of the program is prohibited and an alarm sound is generated.

### SUMMARY OF THE INVENTION

The technology disclosed in the above Japanese Laid-Open Patent Publication No. 05-313720 is a system for determining whether or not a program can operate when the program is executed on the machine. Therefore, if the execution of the program is prohibited, all the setup work done in advance becomes useless, possibly deteriorating the efficiency of a machining task.

The present invention has been devised to solve the problems above, it is therefore an object of the present invention to provide an NC program transfer apparatus capable of improving the efficiency of a machining task.

According to a first aspect of the present invention, an NC program transfer apparatus for transferring an NC program to a machine tool having a numerical control device, includes: an NC program selector configured to select the NC program from a plurality of NC programs; a machine tool selector configured to select the machine tool from a plurality of machine tools; a determiner configured to determine whether or not the selected NC program is one that is generated for the selected machine tool; and a transfer unit configured to transfer the selected NC program to the selected machine tool when the selected NC program is one that is generated for the selected machine tool and prohibit the selected NC program from being transferred to the selected machine tool when the NC program is not the one that is generated for the selected machine tool.

According to a second aspect of the present invention, An NC program transfer method for transferring an NC program to a machine tool having a numerical control device includes: an NC program selecting step of selecting the NC program from a plurality of NC programs; an NC program selecting step of selecting the machine tool from a plurality of machine tools; a determination step of determining whether or not the selected NC program is one that is generated for the selected machine tool; and a transfer step of transferring the selected NC program to the selected machine tool when the selected NC program is one that is generated for the selected machine tool and prohibiting the selected NC program from being transferred to the selected machine tool when the NC program is not the one that is generated for the selected machine tool.

According to the present invention, the efficiency of a machining task can be enhanced.

The above and other objects features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a diagram showing a configuration of an NC program transfer system according to a first embodiment;
FIG. 2 is a diagram showing an example of a NC program of the first embodiment;
FIG. 3 is a flowchart showing the processing flow of NC program transfer control performed in the NC program transfer apparatus of the first embodiment;
FIG. 4 is a diagram showing a specific example of the NC program transfer process of the first embodiment;
FIG. 5 is a diagram showing an example of an NC program of a second embodiment; and
FIG. 6 is a flowchart showing the processing flow of NC program transfer control performed in an NC program transfer apparatus of the second embodiment.

### DESCRIPTION OF THE PREFERRED EMBODIMENTS

NC program transfer apparatuses according to the present invention will be detailed hereinbelow by describing preferred embodiments with reference to the accompanying drawings.

### [First Embodiment]

### [Configuration of NC Program Transfer System]

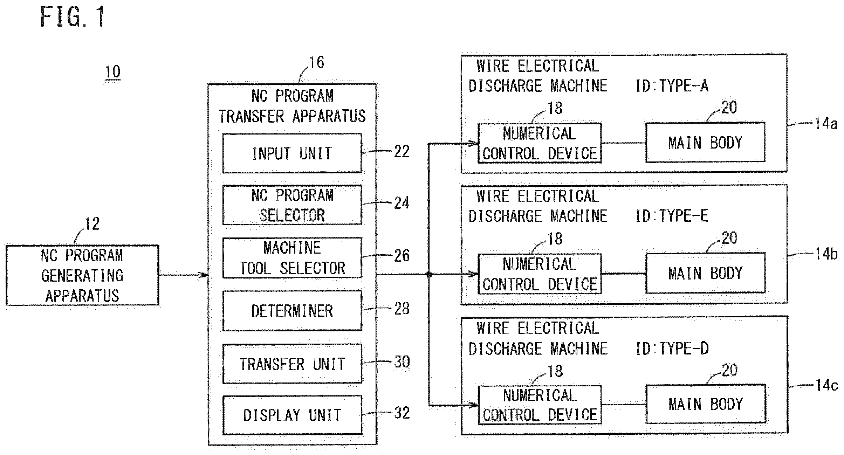

FIG. 1 is a diagram showing the configuration of an NC program transfer system 10. The NC program transfer system 10 includes an NC program generating apparatus 12, multiple wire electrical discharge machines (machine tools) 14a to 14c, and an NC program transfer apparatus 16. Hereinafter, when one of the wire electrical discharge machines 14a to 14c is not specified, any one of the wire electrical discharge machines 14a to 14c is written as wire electrical discharge machine 14. The NC program transfer system 10 is a system that transfers an NC program generated by the NC program generating apparatus 12 to each wire electrical discharge machine 14. Though in the present embodiment an example using the wire electrical discharge machine 14 is illustrated, the system can be applied to a machine tool equipped with a numerical control device such as a machining center, a turning center, and the like, other than the wire electrical discharge machine 14.

The NC program generating apparatus 12 is, for example, a personal computer or the like. Computer-aided manufacturing (CAM) has been installed in the NC program generating apparatus 12 as software. The NC program generating apparatus 12 is operated by a programmer to generate an NC program to be executed in the wire electrical discharge machine 14. The CAM is not necessarily required by the NC program transfer system 10. An NC program may be created directly by means of a general text editor or the like.

The wire electrical discharge machines 14a to 14c each have a numerical control device 18 and a main body 20. The numerical control device 18 controls the main body 20 so that the main body 20 performs the machining according to the NC program. The main body 20 performs electrical discharge machining on a workpiece by applying a voltage and creating sparks across an electrode gap formed between a wire electrode (not shown) and the workpiece (not shown).

The NC program transfer apparatus 16 is, for example, a personal computer or the like. The NC program transfer apparatus 16 is operated by an operator to transfer the NC program generated by the NC program generating apparatus 12 to the wire electrical discharge machine 14.

The NC program transfer apparatus 16 includes an input unit 22, an NC program selector 24, a machine tool selector 26, a determiner 28, a transfer unit 30, and a display unit 32. The input unit 22 is a device operated by an operator, and is, for example, a keyboard, a mouse, or the like.

As the operator operates the input unit 22 to designate one or multiple NC programs from the multiple NC programs prepared by the NC program generating apparatus 12, the NC program selector 24 selects the designated NC program or programs. Hereinafter, the NC program selected by the NC program selector 24 may be referred to as an NC program X. By operating the input unit 22, the operator designates one of the wire electrical discharge machines 14a to 14c, and the machine tool selector 26 selects the designated wire electrical discharge machine 14. Hereinafter, the wire electrical discharge machine 14 selected by the machine tool selector 26 may be referred to as a wire electrical discharge machine 14X.

The determiner 28 determines whether or not the NC program X is an NC program prepared for the wire electrical discharge machine 14X. When the NC program X is an NC program prepared for the wire electrical discharge machine 14X, the transfer unit 30 transfers the NC program X to the wire electrical discharge machine 14X. When the NC program X is not an NC program for the wire electrical discharge machine 14X, the transfer unit 30 prohibits the NC program X from being transferred to the wire electrical discharge machine 14X.

The display unit 32 is, for example, a liquid crystal display or the like and displays the transfer result of the transfer unit 30. For example, when the transfer unit 30 transfers the NC program X to the wire electrical discharge machine 14X and receives a reply indicating the completion of the transfer from the wire electrical discharge machine 14X, the display unit 32 displays a message indicating the success of transfer of the NC program X. When the transfer unit 30 has prohibited the transfer of the NC program X to the wire electrical discharge machine 14X, the display unit 32 displays a message indicating that the transfer of the NC program X is prohibited.

### [NC Program]

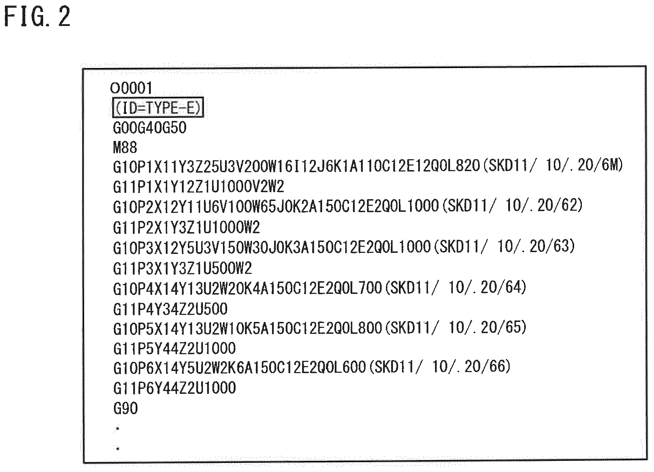

FIG. 2 is a diagram showing an example of an NC program. Though in FIG. 2 the featured part described below is enclosed by a rectangular frame, this frame is not drawn in the actual NC program. Because different models of the wire electrical discharge machine 14 are operated according to different machining conditions, a programmer creates an NC program that is suitable for a model of the wire electrical discharge machine 14. Therefore, the NC program generating device 12 is configured to embed an identifier (ID) in a generated NC program. The ID indicates which model of wire electrical discharge machine 14 is used. In the example of the NC program shown in FIG. 2, "(ID = TYPE-E)" is described indicating that the NC program is used to perform machining with the wire electrical discharge machine 14b having the identifier "TYPE-E".

### [NC Program Transfer Control]

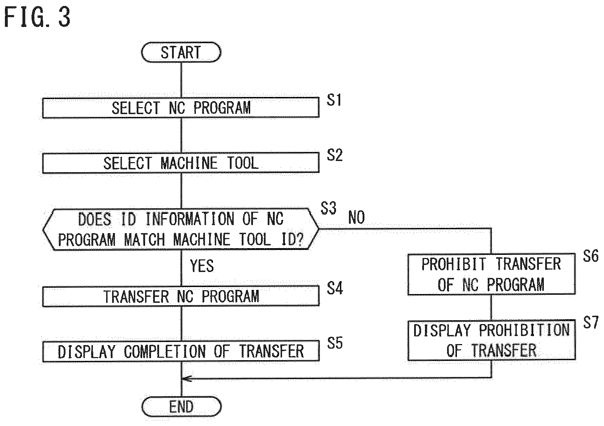

FIG. 3 is a flowchart showing the processing flow of NC program transfer control performed by the NC program transfer apparatus 16.

At step S1, the NC program selector 24 selects one or multiple NC programs X from multiple NC programs, then the control proceeds to step S2. At step S2, the machine tool selector 26 selects one wire electrical discharge machine X from among the wire electrical discharge machines 14a to 14c, and the control proceeds to step S3.

At step S3, the determiner 28 determines whether or not the identifier of the NC program X matches that of the wire electrical discharge machine 14X. When the identifier of the NC program X matches that of the wire electrical discharge machine 14X, the control proceeds to step S4. When the identifier of the NC program X and that of the wire electrical discharge machine 14X do not match each other, the control goes to step S6.

At step S4, the transfer unit 30 transfers the NC program X to the wire electrical discharge machine 14X, and the control proceeds to step S5. At step S5, a message indicating that the transfer of the NC program X has been completed is displayed on the display unit 32, and the control is terminated.

At step S6, the transfer unit 30 prohibits the NC program X from being transferred to the wire electrical discharge machine 14X, and the control proceeds to step S7. At step S7, a message indicating that the transfer of the NC program X is not permitted is displayed on the display unit 32, and the control is terminated.

### [NC Program Transfer Process]

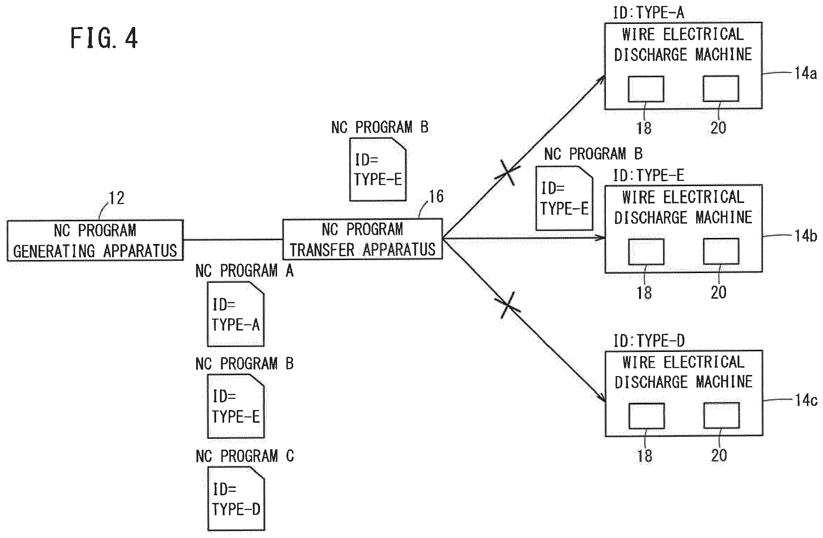

FIG. 4 is a diagram showing a specific example of the NC program transfer process. The programmer operates the NC program generating apparatus 12 to create NC programs A to C corresponding to the models of the wire electrical discharge machines 14a to 14c.

Here, it is assumed that the NC program B is selected in the NC program transfer apparatus 16 (the NC program selector 24, the machine tool selector 26) and the wire electrical discharge machine 14a is selected. At this time, since the identifier "TYPE-E" described in the NC program B does not match the identifier "TYPE-A" of the wire electrical discharge machine 14a, the transfer of the NC program B to the wire electrical discharge machine 14a is prohibited.

On the other hand, it is assumed that the NC program B is selected in the NC program transfer apparatus 16 (the NC program selector 24, the machine tool selector 26) and the wire electrical discharge machine 14b is selected. At this time, since the identifier "TYPE-E" described in the NC program B matches the identifier "TYPE-E" of the wire electrical discharge machine 14b, the NC program B is transferred to the wire electrical discharge machine 14b.

### [Operation and Effect]

NC programs for the wire electrical discharge machines 14 to machine are prepared by the programmer. Since different models of wire electrical discharge machine 14 have different machining conditions, the programmer creates an NC program corresponding to a model of the wire electrical discharge machine 14.

On the other hand, the wire electrical discharge machine 14 is operated by an operator. Since the operator is generally a person who is not a programmer, it is impossible for the operator to judge which model an NC program can be applied to by merely looking at the NC program. There are cases in which the operator should reconsider the initial planning and decide to replace the wire electrical discharge machine 14, which is to be used according to the initial plan, with another wire electrical discharge machine 14, taking account of continuously changing conditions such as the progress of the work, the malfunction of the wire electrical discharge machine 14, and other reasons. At this time, it is worried that the operator may transfer the NC program that is prepared for the initially planned wire electrical discharge machine 14 to a wrong wire electrical discharge machine 14. Conventionally, the wire electrical discharge machine 14 is configured to raise an alarm to deal with such a situation.

However, conventionally, the alarm is raised just when the NC program is executed, so that the work plan has to be reconsidered at the stage where the wire electrical discharge machine 14 is about to start machining, which brings about deterioration of the work efficiency.

To deal with this, in the present embodiment, an NC program transfer apparatus 16 for transferring an NC program to wire electrical discharge machines 14 each having a numerical control device 18, includes: an NC program selector 24 for selecting an NC program X from multiple NC programs; a machine tool selector 26 for selecting a wire electrical discharge machine 14X from the multiple wire electrical discharge machines 14; a determiner 28 for judging whether or not the selected NC program X is one that is generated for the selected wire electrical discharge machine 14X; and a transfer unit 30 that transfers the selected NC program X to the selected wire electrical discharge machine 14X when the selected NC program X is one that is generated for the selected wire electrical discharge machine 14X and prohibits the selected NC program X from being transferred to the selected wire electrical discharge machine 14X when the NC program is not the one that is generated for the selected wire electrical discharge machine 14X.

As a result, when the selected NC program X is not the one that is generated for the selected wire electrical discharge machine 14X, the NC program X is not transferred to the wire electrical discharge machine 14X, so that it is possible for the operator to know that the NC program X selected by the wire electrical discharge machine 14X cannot be executed, before the transfer of the NC program X. Accordingly, the work plan can be reconfigured before starting the machining in the selected wire electrical discharge machine 14X and hence work efficiency can be improved.

The wire electrical discharge machine 14 has an identifier and an identifier is written in the NC program. The determiner 28 determines that the selected NC program X is one that is generated for the selected wire electrical discharge machine 14X when the identifier described in the selected NC program X matches the identifier of the selected wire electrical discharge machine 14X.

Appending a piece of information (an identifier) in an NC program for specifying which wire electrical discharge machine 14 the NC program is generated for enables easy determination of whether or not the selected NC program X is one that is generated for the wire electrical discharge machine 14X.

In the above embodiment, the identifier is added in the NC program, but an identifier may be given to the filename of the NC program generated by the NC program generating apparatus.

### (Example: 00001_TYPE-E.DAT).

The display unit 32 displays the determination result by the determiner 28. Thereby, the operator is able to know whether or not the selected NC program X is one that is generated for the selected wire electrical discharge machine 14X when transferring the NC program to the wire electrical discharge machine 14. Accordingly, the operator can review the work plan at an early stage and hence improve work efficiency.

### [Second Embodiment]

In the first embodiment, it is determined whether a selected NC program X is one that is generated for a selected wire electrical discharge machine 14X, based on the identifier described in the selected NC program X and the identifier of the selected wire electrical discharge machine 14X. In the second embodiment, the selected NC program X is analyzed so as to determine whether the selected NC program X is one that is generated for the selected wire electrical discharge machine 14X, based on commands. Hereinafter, the second embodiment will be described, but the same components as those in the first embodiment are given the same reference numerals and the description thereof is omitted.

### [NC Program]

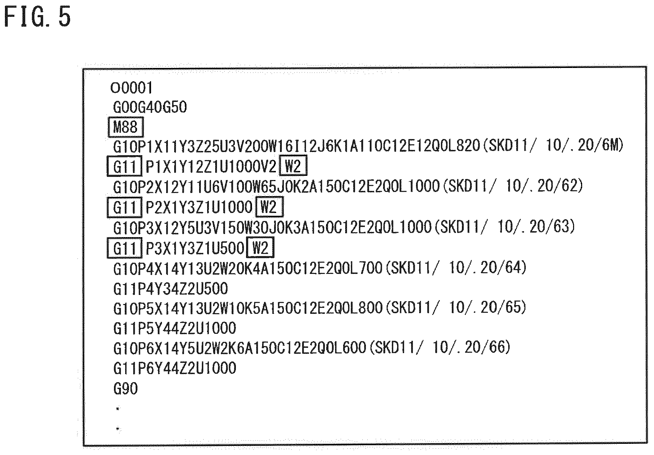

FIG. 5 is a diagram showing an example of an NC program. Though in FIG. 5, the featured parts described below are enclosed by rectangular frames, these frames are not drawn in the actual NC program. This NC program contains an "M88" command code. In addition, in this NC program, "G11" command codes each contain an argument "W". From the command code, it can be determined that this NC program is one that is generated for the wire electrical discharge machine 14b.

### [NC Program Transfer Control]

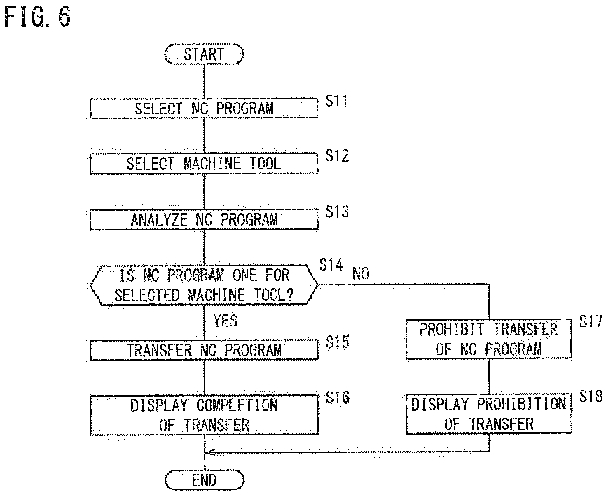

FIG. 6 is a flowchart showing the processing flow of NC program transfer control performed in the NC program transfer apparatus 16.

At step S11, the NC program selector 24 selects one or multiple NC programs X from multiple NC programs and the control proceeds to step S12. At step S12, the machine tool selector 26 selects one wire electrical discharge machine 14X from the multiple wire electrical discharge machines 14, and the control proceeds to step S13.

At step S13, the determiner 28 analyzes the NC program X selected at step S11, and the control proceeds to step S14. At step S14, the determiner 28 judges from the command code extracted at step S13 whether or not the selected NC program X is one that is generated for the selected wire electrical discharge machine 14X. When the NC program X is one that is generated for the wire electrical discharge machine 14X, the control proceeds to step S15. When the NC program X is not the one that is generated for the wire electrical discharge machine 14X, the control goes to step S17.

At step S15, the transfer unit 30 transfers the NC program X to the wire electrical discharge machine 14X, and the control proceeds to step S16. At step S16, a message indicating that the transfer of the NC program X has been completed is displayed on the display unit 32, and the control is terminated.

At step S17, the transfer unit 30 prohibits the NC program X from being transferred to the wire electrical discharge machine 14X, and the control proceeds to step S18. At step S18, a message indicating that the transfer of the NC program X is not permitted is displayed on the display unit 32, and the control is terminated.

### [Operation and Effect]

The determiner 28 analyzes command code of the selected NC program X and decides whether the selected NC program X is one that is generated for the selected wire electrical discharge machine 14X based on the command code. Thereby, there is no need to include information such as identifier information in the NC program, hence it is not necessary to change the configuration of function blocks in the NC program generating apparatus 12 and others.

### [Other Embodiments]

Though the present invention has been described with reference to the first and second embodiments, the specific configuration of the invention is not limited to these embodiments, but changes in design and the like without departing from the gist of the present invention should also be included in the present invention.

The first and second embodiments were described by giving an example including three wire electrical discharge machines 14, but the number of the wire electrical discharge machines may be two, or three or more. Further, though the first and second embodiments were described by giving an example where wire electrical discharge machines 14 are employed as machine tools, the present invention is applicable to other kinds of machine tools.

## Claims

1. An NC program transfer apparatus (16) for transferring an NC program to a machine tool (14) having a numerical control device (18), comprising:
an NC program selector (24) configured to select the NC program from a plurality of NC programs;
a machine tool selector (26) configured to select the machine tool (14) from a plurality of machine tools (14);
a determiner (28) configured to determine whether or not the selected NC program is one that is generated for the selected machine tool (14); and
a transfer unit (30) configured to transfer the selected NC program to the selected machine tool (14) when the selected NC program is one that is generated for the selected machine tool (14) and prohibit the selected NC program from being transferred to the selected machine tool (14) when the NC program is not one that is generated for the selected machine tool (14).

2. The NC program transfer apparatus (16) according to claim 1, wherein:
the machine tool (14) has an identifier;
an identifier is written in the NC program; and
the determiner (28) determines that the selected NC program is one that is generated for the selected machine tool (14) when the identifier in the selected NC program matches the identifier of the selected machine tool (14).

3. The NC program transfer apparatus (16) according to claim 1, wherein the determiner (28) is configured to analyze command code of the selected NC program and determine, based on the analyzed command code, whether or not the selected NC program is one that is generated for the selected machine tool (14).

4. The NC program transfer apparatus (16) according to any one of claims 1 to 3, further comprising a display unit (32) configured to display a determination result by the determiner (28).

5. An NC program transfer method for transferring an NC program to a machine tool (14) having a numerical control device (18), comprising:
an NC program selecting step of selecting the NC program from a plurality of NC programs;
an NC program selecting step of selecting the machine tool (14) from a plurality of machine tools (14);
a determination step of determining whether or not the selected NC program is one that is generated for the selected machine tool (14); and
a transfer step of transferring the selected NC program to the selected machine tool (14) when the selected NC program is one that is generated for the selected machine tool (14) and prohibiting the selected NC program from being transferred to the selected machine tool (14) when the NC program is not one that is generated for the selected machine tool (14).

6. The NC program transfer method according to claim 5, wherein:
the machine tool (14) has an identifier;
an identifier is written in the NC program; and
the determination step determines that the selected NC program is one that is generated for the selected machine tool (14) when the identifier in the selected NC program matches the identifier of the selected machine tool (14).

7. The NC program transfer method according to claim 5, wherein the determination step analyzes command code of the selected NC program and determines, based on the analyzed command code, whether or not the selected NC program is one that is generated for the selected machine tool (14).

8. The NC program transfer method according to any one of claims 5 to 7, further comprising a display step of displaying a determination result by the determination step on a display unit (32).
